**Europäisches Patentamt**

**European Patent Office**

**Office européen des brevets**

(11) Veröffentlichungsnummer: **0 277 662 B1**

# EUROPÄISCHE PATENTSCHRIFT

(45) Veröffentlichungstag der Patentschrift: **18.09.91**

(21) Anmeldenummer: **88101941.8**

(22) Anmeldetag: **23.02.82**

(51) Int. Cl.⁵: **G01N 21/17**

(60) Veröffentlichungsnummer der früheren Anmeldung nach Art. 76 EPÜ: **0 072 821**

(54) Detektionsvorrichtung für den optisch-spektroskopischen Nachweis von Gasen.

(30) Priorität: 25.02.81 CH 1266/81
26.03.81 CH 2058/81
24.07.81 CH 4853/81
29.10.81 CH 6901/81

(43) Veröffentlichungstag der Anmeldung:
**10.08.88 Patentblatt 88/32**

(45) Bekanntmachung des Hinweises auf die
Patenterteilung:
**18.09.91 Patentblatt 91/38**

(84) Benannte Vertragsstaaten:
**AT BE CH DE FR GB LI LU NL SE**

(56) Entgegenhaltungen:
**US-A- 3 727 050**
**US-A- 3 987 304**

**PATENT ABSTRACTS OF JAPAN, Band 4, Nr.
86 (P-16)[568], 20. Juni 1980 & JP-A-55-50 142**

**APPLIED OPTICS, Band 14, Nr. 8, August
1975, Seiten 1960-1976; L.-G. ROSENGREN:
"Optimal optoacoustic detector design"**

(73) Patentinhaber: **OEHLER, Oscar, Dr.**
**Streulistrasse 24**
**CH-8032 Zürich(CH)**

Patentinhaber: **FRIES, Alexis**
**In der Lachen 11**
**CH-8953 Dietikon(CH)**

(72) Erfinder: **OEHLER, Oscar, Dr.**
**Streulistrasse 24**
**CH-8032 Zürich(CH)**
Erfinder: **FRIES, Alexis**
**In der Lachen 11**
**CH-8953 Dietikon(CH)**

(74) Vertreter: **Frei, Alexandra Sarah et al**
**Frei Patentanwaltsbüro Hedwigsteig 6 Postfach 95**
**CH-8029 Zürich(CH)**

## Beschreibung

Die Erfindung liegt auf dem Gebiet der optischen Spektroskopie und betrifft eine Detektionsvorrichtung für den selektiven Nachweis von Gasen. Die Vorrichtung besteht im wesentlichen aus einer Lichtquelle, einem als Gassammelzelle ausgebildeten Detektor und Signalverarbeitungsmitteln. Die Lichtquelle wird thermisch oder mechanisch moduliert und ist ihrerseits aus einem Strahler und einem fokussierenden Reflektor aufgebaut. Das Licht der Quelle wird nach Passieren eines Schmalband-Interferenzfilters in eine das Messgas enthaltende photoakustische Gasküvette eingestrahlt. Die Messung wird bei verschlossener oder annähernd verschlossener Küvette durchgeführt.

Die erforderliche akustische Entkoppelung der Küvette während der Messung und der Austausch des Gases kann durch Kapillaren in der Küvettenwandung, oder hydrostatische Ventile zusammen mit einer Membranpumpe, sowie durch die Kombination von Membranpumpen mit Plattenventilen, gewährleistet werden.

Die Erfassung des Mikrophonsignales und dessen Verarbeitung geschieht beispielsweise mittels einer phasen-selektiven Verstärker-vorrichtung.

Das Licht des Strahlers wird mittels eines fokussierenden Reflektors, beispielsweise eines parabolischen oder sphärischen Spiegels, konzentriert und dem photoakustischen Detektor zugeführt. Es ist darauf zu achten, dass einerseits ein möglichst grosser Anteil der Strahlung der Lichtquelle eingefangen werden kann und dass andererseits die Divergenz des Strahles klein ist, damit die spektrale Auflösung des monochromatisierenden Interferenzfilters, nicht reduziert wird.

Bei Verwendung eines Interferenzfilters sind die Anforderungen an die Strahldivergenz nicht allzu gross. Zur Vermeidung einer unerwünschten Veränderung der Bandpass-Eigenschaft des Interferenzfilters soll der halbe Oeffnungswinkel des Lichtbündels unter 15 Winkelgraden liegen.

Bei Infrarot-Spektrometern muss der atmosphärischen Absorption im Strahlengang, vor allem wegen des Wasserdampfes, durch Spülen mit trockener Luft, oder durch Evakuieren des ganzen Gerätes. Rechnung getragen werden. Auch bei niedrigen Genauigkeitsanforderungen ist es daher wünschenswert, dass der Lichtstrahl über eine möglichst kurze Distanz durch die umgebende Atmosphäre geführt wird.

Unter Nutzung des photoakustischen Effektes ist es in jedem Falle notwendig, die Intensität der Lichtquelle zu modulieren. Meistens wird dies mechanisch mit Hilfe einer rotierenden Segmentscheibe vorgenommen. Da aber preisgünstige Detektoren (beispielsweise pyroelektrische Elemente oder photoakustische Zellen) vielfach bei niedriger Frequenz optimal betrieben werden, kann oft unter Verzicht auf einen mechanischen Lichtunterbrecher die Lichtquelle direkt thermisch durch Ein- und Ausschalten des Strahlers moduliert werden. Diese Lösung ist für eine einfache, zuverlässig arbeitende Gasdetektionsvorrichtung besonders günstig.

Dem Kohlendioxid kommt bei der Gasdetektion eine besondere Bedeutung zu. Auf der einen Seite kann es mit kleinem Aufwand kaum detektiert werden - die billigen und bewährten Metalloxid-Halbleitersensoren sprechen auf $CO_2$ nicht an - auf der anderen Seite lässt sich beispielsweise die Luftqualität in klimatisierten Gebäuden, oder das Auftreten von Bränden durch Detektion des $CO_2$-Gehaltes der Luft gut beurteilen. $CO_2$ absorbiert sehr stark und spezifisch infrarotes Licht. Die relativ hohe $CO_2$-Konzentration der Luft und der grosse Absorptionskoeffizient erlauben es durchaus, die Messung mit Hilfe der Extinktionsmethode, d.h. durch eine Bestimmung der Lichtabschwächung durch das Probegas, vorzunehmen. Bei einer solchen Messung ist es aber absolut notwendig, dass die Intensität des Lichtstrahles vor Eintritt in die Absorptionsküvette genau bekannt ist. Ueblicherweise wird zu diesem Zweck ein Teil des Lichtes durch eine Hilfsoptik , z.B. durch einen halbdurchlässigen Spiegel, ausgekoppelt. Das erfordert aber zusätzlichen Material- und Justier-Aufwand.

Für den Nachweis niedrig konzentrierter atmosphärischer Gasverunreinigungen , wie etwa Kohlenmonoxid, Stickoxid oder Methan, hat sich die photoakustische Methode sehr gut bewährt. Diese besteht darin, dass die Druckänderungen, die in einer Gasmischung bei Absorption von monochromatischem, intensitätsmoduliertem Licht (vornehmlich Infrarotstrahlung) durch eine Komponente einer Gasmischung auftreten, durch ein Mikrophon erfasst werden. Es sei etwa auf den Artikel von L.G.Rosengren, Applied Optics. Vol. 14, Seite 1960 (1975) hingewiesen. Zu diesem Zweck werden meistens abstimmbare Infrarotlaser zusammen mit hochempfindlichen Kondensator-Mikrophonen eingesetzt. Mit einer solchen Vorrichtung konnte beispielsweise L.B.Kreuzer, wie in Journal of Applied Physics, Vol. 42. Seite 2934 (1971) beschrieben ist, Methan in Stickstoff bei einer Konzentration von 10 ppb ($10^{-8}$) mit Hilfe eines 16 mW-Lasers nachweisen. Es wird in jenem Artikel weiter die Vermutung geäussert, dass bei Verwendung intensiverer Infrarotstrahlung Konzentrationen bis $10^{-13}$ gemessen werden können.

Unter wesentlich schwächeren Empfindlichkeits-Anforderungen an die Gasdetektionsvorrichtung lassen sich bedeutende apparative Vereinfachungen vornehmen. Insbesondere kann der sehr kostspielige abstimmbare Infrarotlaser durch eine einfache Lichtquelle, bestehend aus einem Glühkörper und einem Schmalband-Interferenzfilter, ersetzt werden. M.J.D.Low und G.A.Parodi haben in Infrared Physics, Vol. 20, Seite 333 (1980) ein auf dem photoakustischen Prinzip beruhendes Infrarot-Spektrometer beschrieben, bei dem statt des Lasers ein Glühstift verwendet worden ist. Diese Quelle hat sich allerdings wegen ihrer Intensitätsschwäche in Kombination mit einem Gittermonochromator für ein photoakustisches Infrarot-Spektrometer nicht gut bewährt. Eine weitere Beschreibung eines photoakustischen Gasdetektors, der ohne Laserquelle auskommt, ist in der englischen Patentschrift Nr. 1 395 660 vom 18. Sept. 1972 beschrieben. Es geht dort um eine breite, aber wenig tiefe Zelle , in die unfokussierte, thermische Strahlung nach Passieren eines Interferenzfilters eingekoppelt wird.

Intensitätsmässig bringt der Ersatz des Gittermonochromators durch ein Bandpassfilter, beispielsweise durch ein Interferenzfilter, Vorteile, allerdings auf Kosten der Flexibilität und der Genauigkeit.

Eine Uebersicht über weitere Anwendungen der photoakustischen Gasdetektionsmethode, wie das nicht-dispersive Messprinzip und der Betrieb der Zelle in akustischer Resonanz, resp. Nicht-Resonanz, sind in der europäischen Patentanmeldung Nr. 82 900 534.7-2204 eingehend beschrieben.

Es kann gewisse Vorteile bringen, die photoakustische Zelle in akustischer Resonanz zu betreiben, d.h. die Modulationsfrequenz des Lichtes derart zu wählen, dass die Gasküvette als akustischer Resonator funktioniert. Ueblicherweise liegt die Frequenz solcher Zellen im Bereich von mehreren kHz. Das wegen der Reziprozität zur Frequenz an sich kleine photoakustische Signal wird wegen der Resonanzüberhöhung angehoben und fällt damit in einen günstigen Messbereich. Ein grosser Vorteil dieser Methode ist der Umstand, dass die Zelle während der Messung gegebenenfalls offen gehalten werden kann, d.h. dass während des Gasaustausches gemessen werden kann.

Ein Beispiel einer solchen in akustischer Resonanz betriebenen photoakustischen Gasküvette ist im japanischen Patent Nr. 55.50142 vom 11.4.1980 von NIPPON DENKI K.K. (Erfinder KOUJI INOUE) aufgeführt. Durch zusätzliches Anbringen von aus Volumina und Rohren bestehenden akustischen Filtern war es möglich, während des Gasflusses eine hochempfindliche und kontinuierliche photoakustische Messung durchzuführen.

Wird hingegen eine photoakustische Gasküvette bei niedriger Frequenz betrieben, so ist der akustischen Entkopplung der Gasküvette während der Messung grösste Aufmerksamkeit zu schenken: Einerseits muss verhindert werden, dass externer Schall in die Gasküvette gelangt und die Schallmessung stört, andererseits ist dafür zu sorgen, dass das gebildete photoakustische Signal nicht durch Gasaustausch mit der Umgebung reduziert wird. Trotzdem ist die Wahl einer niedrigen Modulationsfrequenz oft zu begrüssen. Der Betrieb einer thermischen Quelle bei einer Frequenz im 5Hz - 15Hz - Bereich erlaubt eine effiziente thermische Modulation, d.h. die Quelle kann leicht durch durch Ein- und Ausschalten moduliert werden. Es kann somit auf mechanisch bewegliche Teile, wie es eine Chopper-scheibe darstellen, verzichtet werden. Damit wird die Zuverlässigkeit der Vorrichtung erhöht.

Es ist Aufgabe der Erfindung, eine einfache, kostengünstige, flexibel anwendbare und selektiv arbeitende Gasdetektionsvorrichtung zu schaffen, die auf dem Prinzip der photoakustischen Spektroskopie beruht.

Die Aufgabe wird gelöst durch die in den Ansprüchen definierten Merkmale, insbesondere durch Verwendung einer bei tiefer Modulationsfrequenz betriebenen Lichtquelle, die aus einem thermischen Strahler und einem fokussierenden Reflektor aufgebaut ist, einem Bandpassfilter als monochromatisierendes Element einer Gasdetektionszelle in Form einer photoakustischen Küvette mit einem Mikrophon als Schallempfänger, sowie einer schalldämpfenden Gasaustauschvorrichtung.

Die Erfindung wird anhand der beiliegenden Zeichnungen beschrieben. Es zeigen:

Fig. 1    eine Uebersicht der funktionellen Komponenten der Gas detektionsvorrichtung,

Fig. 2    den Aufbau einer Variante der erfindungsgemässen, selektiven Gasdetektionsvorrichtung,

Fig. 3    ein Beispiel eines fokussierenden Lichtreflektor-Vorrichtung unter Verwendung eines parabolischen Hohlspiegels,

Fig. 4    ein weiteres Reflektorbeispiel elliptischer Form.

Fig. 5    einen fokussierenden Hohlspiegel in Form eines, beide Brennpunkte umschliessenden, Vollellipsoides,

Fig. 6    eine mögliche Ausführung eines Monochromators, der auch gleichzeitig als Lichtunterbrecher verwendet werden kann.

Fig 7    ein Beispiel einer Gasfördervorrichtung,

Fig. 8    eine photoakustische Gasküvette mit fluidgefüllten Tauch gefässen zur akustischen Entkopplung und zusätzlicher Füssigkeits-Austauschvorrichtung,

Fig.9    eine weitere Möglichkeit zur akustischen Entkopplung einer photoakustischen Küvette mittels fluid-gefüllten Kapillaren,

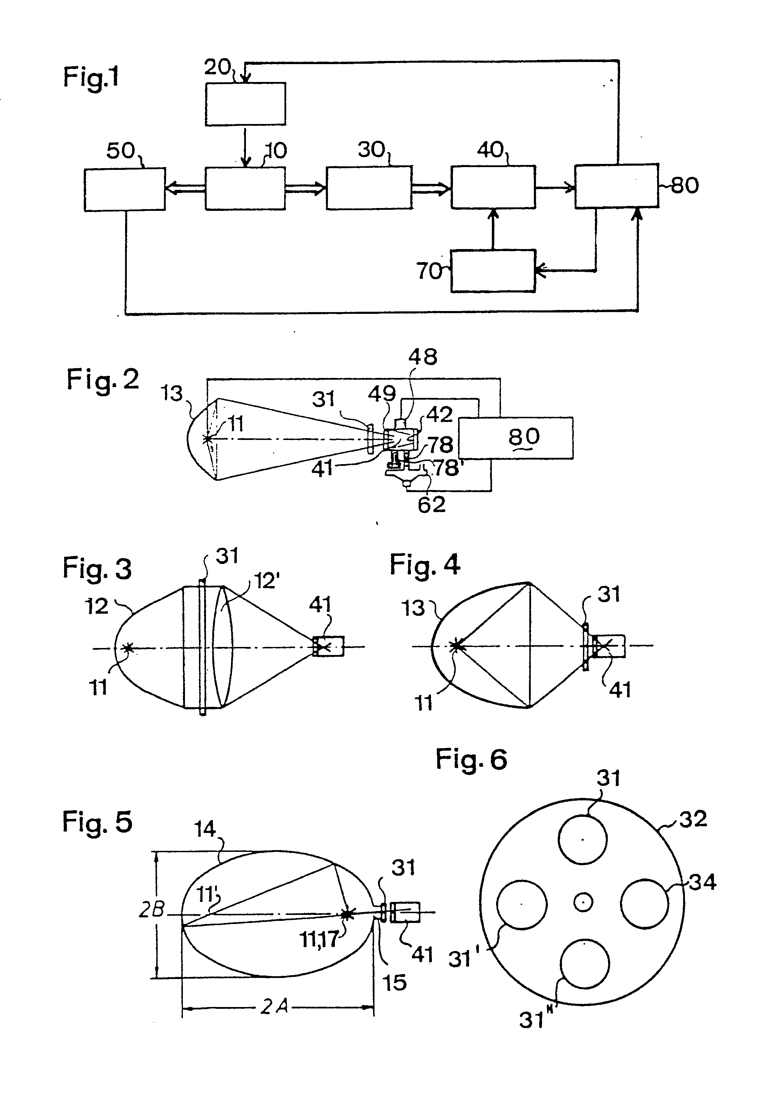

Fig. 1 ist eine Üebersichtsdarstellung der funktionellen Komponenten der Gasdetektionsvorrichtung. Die von der Lichtquelle (10) ausgehende, durch den Lichtmodulator (20) intensitätsmodunlierte Strahlung wird einerseits als Messstrahl nach Passieren des Monochromators (30) einer photoakustischen Gasküvette (40) und gegebenenfalls zusätzlich als Referenzstrahl dem Referenzdetektor (50) zugeführt. Das Probengas befindet sich in der Gasküvette (40), die gleichzeitig eine auf dem photoakustischen Prinzip beruhende Gasdetektionszelle ist. Die Gasaustauschvorrichtung (70) sorgt für den Gasaustausch vor und die akustische Entkopplung der Küvette (40) während der Messung. Die elektrischen Signale der photoakustischen Gasküvette (40) und gegebenenfalls der Referenz-Detektionszelle (50) werden von der Auswerte- und Steuer-Vorrichtung (80) erfasst und verarbeitet. Des weiteren steuert diese Vorrichtung gegebenenfalls den Lichmodulator (20), die Gasaustauschvorrichtung (70) und den Monochromator (30).

In Fig. 2 ist der konstruktive Aufbau der erfindungsgemässen Gasdetektionsvorrichtung als Uebersicht dargestellt. Was die Details und die alternativen Ausführungsformen betrifft, sei auf die Beschreibungen zu den Fig. 3 bis Fig. 9 verwiesen.

Die Strahlung des beispielsweise thermisch modulierten Strahlers (11) wird mittels des fokussierenden Reflektors (13) gesammelt. Nebst der in Fig. 2 dargestellten Anordnung, sind weitere Konstruktionen von geeigneten Lichtquellen (10) im Zusammenhang mit den Fig. 3 bis Fig. 5 ausführlich beschrieben.

Das Licht der Quelle (11,13) wird unter kleinem Oeffnungswinkel des Lichtkegels einem Bandpassfilter (31) zugeführt. Die Eigenschaften dieses Filters (31) und dessen Einsatzmöglichkeiten sowie weitere Filtrierungsmöglichkeiten des Lichtstrahles sind im begleitenden Text der Fig. 6 erläutert.

Bei der photoakustischen Gasküvette (41), der die Strahlung der Quelle (11,13) nach Passieren des Bandpassfilters (31) zugeführt wird, handelt es sich um einen kleinen, weitgehend verschlossenen Hohlraum. Das Licht dringt durch das Fenster (49) in das innere der Küvette (41) und wird gegebenenfalls, zur Verlängerung des Lichtweges, an der Küvettenrückseite durch einen ebenen oder gekrümmten Reflektor (42) zurückgeworfen. Das Mikrophon (48) ist in der Gasküvette vornehmlich seitlich angebracht, sodass kein direkt eingestrahltes Licht auf die Membrane des Mikrophons (48) fallen kann.

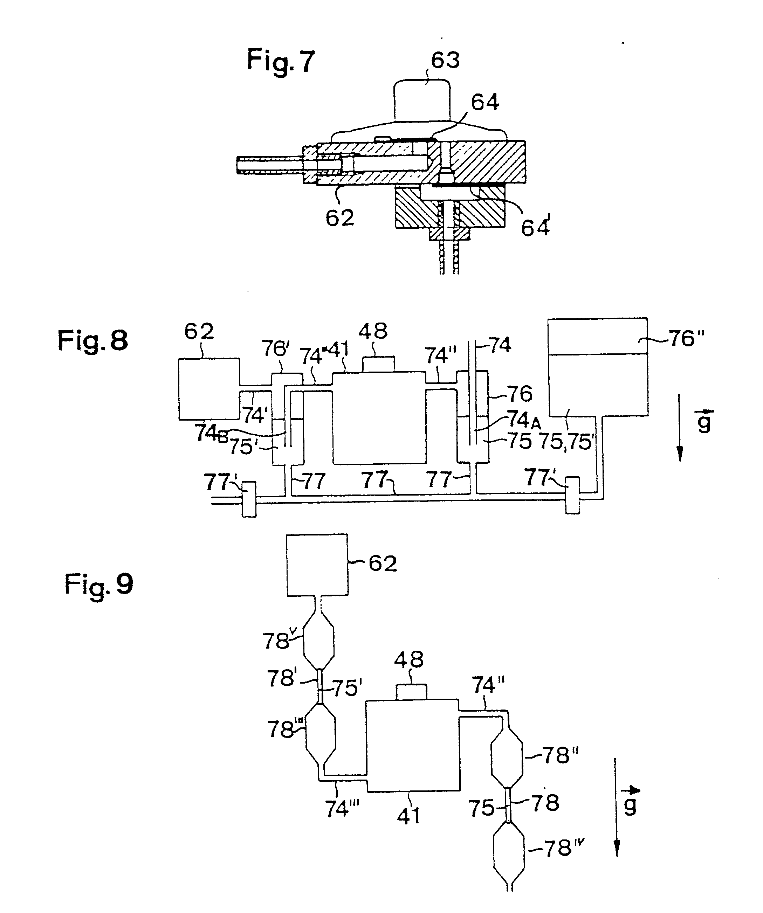

Besondere Wichtigkeit muss der Umwälzung des zu messenden Gases in der photoakustischen Gasküvette (41) beigemessen werden. Die entsprechende Vorrichtung ist in Fig. 1 mit dem Block (70) charakterisiert. Fig. 2. zeigt eine Realisierungsmöglichkeit einer Gasaustauschvorrichtung (70), bestehend aus einer Gasfördervorrichtung (62) und schalldämmenden Elementen (78,78') mit einem flüssigen Sperrfluid. Der Zweck dieser Schalldämmung, deren Funktionsweise sowie eine weitere Realisierungsmöglichkeit sind im Zusammenhang mit den Fig. 7 bis Fig. 9 ausführlich erläutert.

Auf die Signalerfassungs- und Datenverarbeitungs-Mittel (80) soll nicht näher eingegangen werden. In Frage kommt etwa ein Lock-in-Verstärker, der in Analog- oder Digital-Technologie realisiert ist. Ein Bespiel der letztern Vorrichtung ist in der Schweizer Patentanmeldung Nr. 2 058/81-9 vom 26. März 1981 näher beschrieben.

Die Darstellungen von Fig. 3, Fig. 4 und Fig. 5 zeigen Beispiele von Lichtquellen (10), die sich für die vorgesehene Anwendung gut eignen. Sie bestehend aus einem Strahler (11), beispielsweise einer kleindimensionierten Glühwendel (11), und einer fokussierenden Optik (12,12',13,14).

Bei Fig.3 handelt es sich um einen paraboloidförmigen Hohlspiegel (12), der parallele Strahlung erzeugt. Die Sammellinse (12') konzentriert dieselbe auf das Eintrittsfenster (49) der photoakustischen Küvette (41). Falls es sich beim optischen Bandpassfilter (31) um ein Interferenzfilter handelt, ist es vorteilhaft dasselbe zwischen dem Reflektor (12) und der Linse (12') zu positionieren, da dort der Lichtstrahl parallel ist und demzufolge der Filter-Durchlassbereich nicht verfälscht wird.

Fig. 4 und Fig. 5 zeigen ellipsoidförmige Reflektoren. Das Ellipsoid besitzt wohl gute Fokussierungseigenschaften, doch kann die grosse Strahl-Divergenz bei Verwendung einer elliptischen Teilkalotte (13) und eines Interferenzfilters (31), wie in Fig 4 abgebildet, zu einer unakzeptablen Verbreiterung des spektralen Transmissionsbereiches des Filters (31) führen. In dieser Beziehung bringt der Vollellipsoid-Reflektor (14) nach Fig. 5 Vorteile. Diese Lichtsammelvorrichtung ist Gegenstand der bereits erwähnten europäischen Anmeldung Nr. 85 101 058.7. Die Funktionsweise ist dort genau beschrieben. Es sei hier nur kurz darauf hingewiesen, dass bei jener Vorrichtung der von der Quelle (11) emittierte Lichtstrahl die Quelle (11) mehrmals passiert, wobei eine Lichtsammlung längs der grossen Hauptachse stattfindet. Das aus dem Vollellipsoid (14) austretende Licht ist nur leicht divergent.

Fig. 6 zeigt die Anordnung einer Anzahl von Bandpassfiltern (31,31',31") oder gasgefüllten Küvetten (34,34',34") auf einer rotierbaren Scheibe (32).

Der Durchlassbereich des Filters (31) ist dem Absorptionsspektrum der zu detektierenden Gaskomponente angepasst. Es sei darauf hingewiesen, dass im Gegensatz zur Anwendung eines Lasers, wo die Lichtquelle auf eine einzige Rotationslinie der licht-absorbierenden Moleküle abgestimmt ist, die ganze Rotationsstruktur wegen der Bandbreite des Filters (31) erfasst wird. Das wirkt sich günstig auf die absorbierte Lichtmenge der ohnehin lichtschwachen Quelle (10) aus. Bei Gasen, die in mehreren Spektralbereichen Strahlung, insbesondere Infrarotstrahlung absorbieren, ist derjenige Bereich auszuwählen, wo einerseits die Absorption möglichst gross ist, andererseits die Ueberlappung mit Absorptionsspektren anderer Gaskomponenten möglichst wenig ins Gewicht fällt. Die Störungen der Messung durch andere Gaskomponenten lässt sich beispielsweise weitgehend eliminieren, indem statt eines einzigen mehrere Schmalbandfilter (31,31',31") verwendet werden, die den Maxima bzw. den Flanken von Messgas bzw. den Störgaskomponenten angepasst sind. Die effektive Gaskonzentration, bzw. die Konzentration verschiedener Komponenten lassen sich dann aus den Messungen, die mit den verschiedenen eingesetzten Schmalbandfiltern (31, 31',31") durchgeführt worden sind, vorteilhaft numerisch ermitteln, analog wie das P.Perlmutter, S.Shtrikman und M.Slatkine in Applied Optics, Vol. 13, Seite 2267 (1979) für eine, mit einer Laser-Lichtquelle ausgerüsteten Vorrichtung, ausführlich beschrieben haben. Die Bandpassfilter (31,31'31") können beispielsweise nacheinander in den Strahlengang geschoben werden, oder , wie Fig. 6 zeigt, auf einer rotierbaren Scheibe (32) befestigt sein.

Es besteht auch die Möglichkeit, mehrere filtrierte Lichtbündel auf dieselbe photoakustische Gasküvette (41) zu leiten, oder aber mehrere photoakustische Vorrichtungen, bestehend aus einer Lichtquelle (10), einem Bandpassfilter (31) und einer photoakustischer Gasküvette (41) zu verwenden, wobei bei jeder Teilvorrichtung das Filter (31) einer anderen Gaskomponenten angepasst ist.

Anstelle von den Bandpassfiltern (31,31',31") können auch gasgefüllte Küvetten (34) zum Einsatz kommen. Es wird dabei die spezifische Absorptionsfähigkeit von Gasen im infraroten Spektralbereich genutzt. Mit solchen Küvetten (34) kann erreicht werden, dass der Lichtstrahl in einem oder mehreren Spektralbereichen blockiert ist und damit das photoakustische Signal in der Küvette (41), das durch eine absorptionsfähige Gaskomponente bewirkt wird, beeinflusst werden kann.

Gegebenenfalls ist auch eine Kombination von Bandpassfiltern (31,31',31") und Gasküvetten (34) möglich, wie das in Fig. 6 dargestellt ist. Die Filter oder Gasküvetten können entweder, wie bereits erwähnt, während der Messung fest im Strahlengang positioniert sein, oder die Scheibe kann während des Messungvorganges rotieren. Sie hat dann die Doppelfunktion eines Lichtmodulators und eines Monochromators.

Es wurde bereits darauf hingewiesen, dass die photoakustische Gasküvette während der Messung akustisch verschlossen sein muss. Einerseits dürfen keine störende Umgebungsgeräusche zum Mikrophon gelangen, andererseits muss die Küvette zur Aufrechterhaltung des photoakustischen Signales akustisch verdämmt sein. Die Beschreibung entsprechender Gasaustausch-Vorrichtungen (70) ist der Hauptgegenstand dieser Erfindung. Das Hauptgewicht wurde auf möglichst einfache, zuverlässige Konstruktionen gelegt, die dem vorliegenden Problem der effizienten akustischen Entkopplung, bei gleichzeitig nur kleiner geforderten Ueberdruckresistenz, optimal Rechnung tragen.

Fig. 7 zeigt eine Ausführungsform einer Gasförder-Vorrichtung (62), welche Bestandteil, der Gasaustauschvorrichtung (70) ist. Dieselbe, (62), besitzt die Form einer Membranpumpe, die mit Hilfe eines Kleinlautsprechers (63) realisiert worden ist. Letzterer besitzt beispielsweise eine Kunststoffmembrane von 3 cm Durchmesser. Das Gaseinlassventil (64) und das Gasauslassventil (64') sind dünne Gummimembranen. Bei einer Betriebsfrequenz von 50 Hz konnte mit der Vorrichtung nach Fig. 7 gegen einen Ueberdruck von 5 mbar eine Luftmenge von 0.7 $cm^3$ gefördert werden.

Da ein aktiver Gasaustausch, wie er etwa durch die in Fig. 7 gezeigte Gasfördervorrichtung (62) gewährleistet werden kann, stets mit Druckfluktuationen verbunden ist, kann während der Gasumwälzung nicht gemessen werden. Es muss daher im alternierenden Betrieb zunächst mit Hilfe der Vorrichtung (70) Messgas ausgetauscht, und anschliessend die photoakustische Messung durchgeführt werden.

Auf zwei verschiedene Lösungsmöglichkeiten, die sich im Experiment bewährt haben, soll im Folgenden näher eingegangen werden.

Diese zwei Möglichkeiten der akustischen Entkopplung sind erstmals in der Schweizer Patentanmeldungen Nr 4 853/81-8 vom 24. Juli 1981 beschrieben. Sie beruhen auf einer hydrostatischen akustischen Entkopplung.

Fig. 8 zeigt eine der Realisierungsmöglichkeiten: Die Gasfördervorrichtung (62) zieht das Gas ausserhalb des Systems über die Zuleitung (74) und ein Tauchrohr (74A) durch ein flüssiges Medium (75) in den Behälter (76), von wo aus es über die Verbindung (74") in die photoakustische Küvette (41) gelangt. Das aus der photoakustischen Küvette (41) verdrängte Gas gelangt über die Verbindung (74'") und ein zweites Tauchrohr (74B) durch das flüssige Medium (75') in den Behälter (76'), von wo es über die Leitung (74') abgepumt wird.

Ist die Gasfördervorrichtung (62) ausser Betrieb, so ist die photoakustische Gasküvette wegen der flüssigen Medien (75,75') von der Aussenwelt weitgehend akustisch entkoppelt, d.h. das photoakustische Signal wird kaum abgeschwächt und das Eindringen von akustischen Störsignalen ist weitgehend verhindert. Die akustische Entkopplung der photoakustischen Küvette (41) beruht darauf, dass Luft und flüssige Medien sehr unterschiedliche Schallhärten (h = (E * p)$^{1/2}$ , wo E: Elastizitätsmodul, p: Dichte) aufweisen und demzufolge die akustische Leistungsanpassung an den Gas/Flüssigkeits- und Flüssigkeits/Gas-Schnittstellen sehr schlecht ist. Im menschlichen Ohr beispielsweise, wo dieses Problem bei der Schallübertragung vom äusseren Ohr auf die Gehörflüssigkeit des Innenohrs auch auftritt, wird eine gute Leistungsanpassung durch die Gehörknöchelchen im Mittelohr gewährleistet. Der unterschiedlichen Schallhärte von Luft und Gehörflüssigkeit wird mit einer mechanischen Uebersetzung (Uebersetzungsverhältnis 60:1) Rechnung getragen.

Beim Betrieb der Gasfördervorrichtung (62) entstehen, bedingt durch das nur stossweise durch die flüssigen Medien (75) und (75') strömenden Gas, in der photoakustischen Küvette (41) charakteristisch modulierte Druckschwankungen, die mit dem Mikrophon (48) registriert werden. Das so entstehende Mikrophonsignal gestattet es, die Funktion des Durchflussystems, der Gasfördervorrichung (62) und des Mikrophons (48) zu überprüfen.

Die flüssigen Medien (75,75') wirken gleichzeitig als Gasfilter. Sie ermöglichen es, das Gas vor seinem Eintritt in die photoakustische Küvette (41) zu waschen. Durch geeignete Wahl der Medien (75,75') können dem zu messenden Gas auch gewisse, die Messung störende Komponenten entzogen werden, beispielsweise Wasser. Zu diesem Zweck ist es auch denkbar, über die Zuleitung (74) und Leitung (74') die Behälter (76) und (76') mit weiteren, zu (76) und (76') analogen Behältern und sonstigen Gasaufbereitungsanlagen zu verbinden. Die Medien (75,75') können auch, so es sich um eine zusätzliche Gasvorreinigung handelt, durch feste Stoffe ersetzt werden.

Um zu verhindern dass die flüssigen Medien (75,75') ins Innere der photoakustischen Gasküvette (41) gelangen, ist die Vorrichtung bezüglich der Schwerkraft richtig zu lagern, wie das in Fig. 8 dargestellt ist.

Statt die Gasfördervorrichtung (62), wie in Fig. 8 gezeigt, an der Zuleitung (74') anzuschliessen, ist es möglich, dieselbe auf der anderen Seite, nämlich an die Zuleitung (74) anzukoppeln.

Als zusätzliche Massnahme mag es sinnvoll sein, die flüssigen Medien (75,75') gelegentlich, beispielsweise automatisch, auszuwechseln. Dies kann über Zuleitungen (77), die unterhalb der flüssigen Medien (75,75') in die Behälter (76,76') münden und mit einem oder mehreren Vorratsbehälter (76''), in denen Reserven der Medien (75,75') lagern, in Verbindung stehen, erreicht werden. Der Wechsel der flüssigen Medien kann beispielsweise durch Betätigung der Ventile (77') vorgenommen

werden.

In Fig. 9 ist eine weitere Ausführungsform der Erfindung dargestellt. In den schalldampfenden Elementen (78,78') in Form von Kapillaren und befinden sich die flüssigen Medien (75) und (75'). Die Durchmesser der Kapillaren (78) und (78') sind so bemessen, dass bei Druckgleichheit im Expansionsbehälter (78'') bzw.(78''') und im Ausgangsstutzen (78'''') bzw. (78''''') die Kapillarkräfte ein Ausfliessen des flüssigen Mediums (75,75') im Bereich der Betriebstemperatur verhindern.

Die Gasfördervorrichtung (62) erzeugt bei Betrieb im Ausgangsstutzen (78'''') einen derartigen Druckabfall, dass das flüssige Medium (75) aus der Kapillare (78) in den Expansionsbehälter (78'') gelangt und sich dort sammelt, während das Gas über die Zuleitung (74'') die photoakustische Gasküvette (41) erreicht. Das aus der Gasküvette (41) verdrängte Gas gelangt über die Zuleitung (74''') in den Expansionsbehälter (78'''), wo es das in in der Kapillare (78') befindliche Medium (75') in den Ausgangsstutzen (78''''') drückt. Wiederum wird das flüssige Medium (75') im Ausgangsstutzen (78''''') zurückgehalten, während das Gas abgepumpt wird.

Wird die Gasfördervorrichtung (62) ausgeschaltet, so fliesst das sich nun im Expansionsbehälter (78'') resp. im Ausgangsstutzen (78''''') befindliche flüssige Medium (75) resp. (75') in die Kapillaren (78) resp. (78') zurück und koppelt dadurch die photoakustische Gasküvette (41) von äusseren Raumschallquellen ab. Damit wird gleichzeitig die Verdämmung des photoakustischen Signales in der Gasküvette (41) gewährleistet. Statt die Gasfördervorrichtung (62) am Ausgangsstutzen (78''''') anzubringen, kann sie auch am Stutzen (78'''') befestigt sein.

Um das Eindringen der Medien (75,75') in die Küvette (41) zu verhindern und den Rückfluss in die entsprechenden Kapillaren zu gewährleisten, ist bei der Anordnung nach Fig. 10 die Küvette nur während der Gasaustauschphase in Bezug auf die Schwerkraft richtig zu lagern. Ausserhalb der Gasaustauschphasen, beispielsweise während eines Transportes oder einer Messung etc., spielt die Lagerung , wegen der in dieser Zwischenphase wirkenden Kapillarkräfte keine Rolle. Das Ausfliessen der Medien (75) und (75') ist verhindert.

Auch bei dieser Gasaustauschvorrichtung (70) kann die Funktion der Gasfördervorrichtung (62) während des Gasaustausches, die Funktionstüchtigkeit des Mikrophons und der hydrostatischen Ventile (78,78') überprüft werden. Dies ist dank der, beim Gaswechsel entstehenden charakteristischen Druckschwankungen, die beim Passieren des Gases durch die in den Stutzen (78'',78''') gesammelten flüssigen Medien (75,75',) in der photoakustischen Gasküvette (41) entstehen, möglich.

**Patentansprüche**

1. Eine optische Detektionsvorrichtung für den selektiven Nachweis von Gasen,

   mit einer Lichtquelle (10), aus einem Strahler (17) und einem die Optik bildenden Fokussiermittel (12,12',13,14) bestehend,

   mit einer das ausgestrahlte Licht modulierenden Vorrichtung (20),

   mit einem Monochromator (30), aus einem oder mehreren, gegebenenfalls auf einer rotierbaren Scheibe (32) befestigten optischen Bandpassfiltern (31,31',31") oder/und einem oder mehreren gasgefüllten Küvetten (34) bestehend, der zwischen der Lichtquelle (10) und einem als Gassammelzelle ausgebildeten Detektor (40,41) angeordnet ist,

   mit einer Gasaustauschvorrichtung (70) und mit Signalverarbeitungsmitteln 80) die zur Analyse der Signale des Detektors (40,41) mit diesem verbunden sind,

   **dadurch gekennzeichnet,**

   dass an dem als Gassammelzelle ausgebildeten und im Strahlengang der Lichtquelle (10) angeordneten Detektor (40,41) ein Mikrophon (48) derart angeordnet ist, dass die auf dem photoakustischen Prinzip beruhenden Druckschwankungen im Detektor (40,41) aufgenommen werden können, und

   dass die Gasaustauschvorrichtung (70) aus einer Gasfördervorrichtung (62) und schalldämpfenden Elementen (75,75',76 ,76,78,78') besteht, welche schalldämpfenden Elemente ein flüssiges Sperrfluid enthalten und dadurch gegenüber dem Messgas eine grosse Schallhärte aufweisen, und diese schalldämpfenden Elemente mit dem Detektor (40,41) derart in Verbindung gebracht sind, dass durch sie hindurch ein Gasfluss durch den Detektor (40,41) stattfinden kann, wobei während Stillstandphasen des Gasflusses, das heisst, während der akustischen Abkoppelung photoakustische Messungen durchgeführt werden können.

2. Detektionsvorrichtung nach Anspruch 1. dadurch gekennzeichnet, dass die schalldämpfenden Elemente der Gasaustauschvorrichtung (70) durch mindestens ein erstes (75), am Eingang (74") der Gassammelzelle (41) angeordnetes, und mindestens ein zweites (75'), am Ausgang (75") der Gassammelzelle angeordnetes, flüssiges Sperrfluid (75,75') gebildet werden.

3. Detektionsvorrichtung nach Anspruch 2. dadurch gekennzeichnet, dass sich das Sperrfluid (75,75') in den Sperrfluidbehältern (76,76'), in welche Tauchrohre (74A,74B) eintauchen, befindet.

4. Detektionsvorrichtung nach Anspruch 3, dadurch gekennzeichnet, dass die Sperrfluidbehälter (76,76') über eine Leitung (77) mit einem Sperrfluid-Vorratsbehälter (76"), der zusätzliches Sperrfluid (75) enthält, in Verbindung stehen.

5. Detektionsvorrichtung nach Anspruch 4, dadurch gekennzeichnet, dass in der Leitung (77) mindestens ein, den Sperrfluidfluss hemmendes, Absperrorgan (77') angeordnet ist.

6. Detektionsvorrichtung nach Anspruch 2, dadurch gekennzeichnet, dass sich das Sperrfluid (75,75') in Sperrfluidkapillaren (78,78') befindet.

7. Detektionsvorrichtung nach Anspruch 6, dadurch gekennzeichnet, dass die, das Sperrfluid (75,75') enthaltenden, Sperrfluidkapillaren (78,78') an den Enden kontinuierlich in trichterförmige, die Kapillarwirkung sukzessive abschwächende, Erweiterungen, die als Expansionsgefässe (78",78"",78"',78"") dienen, übergehen.

8. Detektionsvorrichtung nach einem der Ansprüche 1 bis 7, dadurch gekennzeichnet, dass die Gasfördervorrichtung (62) auf dem Prinzip der Membranpumpe beruht.

9. Verwendung der Detektionsvorrichtung nach Anspruch 1, dadurch gekennzeichnet, dass vom Mikrophon (48) in der Gassammelzelle (41) sowohl ein photoakustisches Messignal als auch beim Gasaustausch entstehende , charakteristische Druckschwankungen aufgefangen werden und dass die daraus abgeleiteten elektrischen Signale durch die Signalverarbeitungsmittel (80) zur Kontrolle der Funktionsweise der Gasaustauschvorrichtung (70), insbesondere von Membranpumpen (62,62') und gegebenenfalls der Sperrfluids (75,75'), sowie des Mikrophons (48), verwendet werden.

**Claims**

1. An optical detection device for the selective detection of gases, having a light source (10) comprising an emitter (17) and a focussing means (12,12' ,13,14) forming the optics, having an apparatus (20) modulating the emitted light, having a monochromator (30) comprising one or more optical band-pass filters (31,31' ,31"), optionally fixed to a rotary disk (32), and/or one or more gas-filled cells (34), which is positioned between the light source (10) and a detector (40,41) constructed as a gas collecting cell and having a gas exchange device (70) and signal processing means (80) which, for analysing the signals of the detector (40,41), are connected thereto, characterized in that on the detector (40,41) constructed as a gas collecting cell and arranged in the optical path of the light source (10) is arranged a microphone (48) in such a way that the pressure fluctuations based on the photoacoustic principle can be recorded in the detector (40,41) and that the gas exchange device (70) comprises a gas feed device (62) and sound deadening elements (75,75' ,76,76', 78,78'), which contain a liquid confining fluid and consequently have a great acoustic stiffness with respect to the measuring gas and said sound deadening elements are so connected to the detector (40,41) that through them a gas flow can take place through the detector (40,41), photoacoustic measurements being performable during stationary phases of the gas flow, i.e. during acoustic disconnection.

2. Detection device according to claim 1, characterized in that the sound deadening elements of the gas exchange device (70) are formed by at least one first (75) liquid confining fluid (75,75') located at the inlet (74") of the gas collecting cell (41) and at least one second (75') liquid confining fluid (75,75') located at the outlet (75"') of the gas collecting cell.

3. Detection device according to claim 2, characterized in that the confining fluid (75,75') is located in the confining fluid containers (76,76'), into which are dipped dip tubes (74A,74B).

4. Detection device according to claim 3, characterized in that the confining fluid containers (76,76') are connected via a line (77) to a confining fluid storage tank (76"), which contains additional confining fluid (75).

5. Detection device according to claim 4, characterized in that at least one confining fluid flow-inhibiting shutoff device (77') is located in the line (77).

6. Detection device according to claim 2, characterized in that the confining fluid (75,75') is located in confining fluid capillaries (78,78').

7. Detection device according to claim 6, characterized in that the confining fluid capillaries (78,78') containing the confining fluid (75,75') at the ends continuously pass into funnel-shaped extensions, which successively reduce the capillary action and which serve as expansion vessels (78", 78"", 78"', 78""").

8. Detection device according to one of the claims 1 to 7, characterized in that the gas feed device (62) is based on the diaphragm pump principle.

9. Use of the detection device according to claim 1, characterized in than both a photoacoustic measuring signal and characteristic pressure fluctuations occurring during the gas exchange are detected by the microphone (48) in the gas collecting cell (41) and that the electrical signals derived therefrom are used by the signal processing means (80) for checking the function of the gas exchange device (70), particularly of diaphragm pumps (62,62') and optionally the confining fluid (75,75'), as well as the microphone (48).

**Revendications**

1. Dispositif de détection optique pour la détection sélective de gaz, comprenant une source lumineuse (10), composée d'une lampe (17) et d'un moyen de focalisation (12, 12', 13, 14) formant le système ; un dispositif (20) servant à moduler la Lumière émise ; un monochromateur (30), composé d'un ou de plusieurs filtres optiques passebande (31, 31', 31"), éventuellement fixé(s) sur un disque tournant (32), et/ou d'une ou de plusieurs cuvettes (34) remplie(s) de gaz, qui est disposé entre la source lumineuse (10) et un détecteur (40, 41) constitué par une cellule collectrice de gaz ; et un dispositif d'échange gazeux (70) et des moyens de traitement des signaux (80) qui sont reliés à ce dispositif pour l'analyse des signaux du détecteur (40, 41), caractérisé en ce qu'un microphone (48) est disposé au droit du détecteur (40, 41) constitué par une cellule collectrice de gaz et disposé sur le trajet des rayons lumineux de la source lumineuse (10), de telle manière" que les fluctuations de la pression qui reposent sur le principe photo-acoustique puissent être captées dans le détecteur (40, 41) ; et en ce que le dispositif d'échange gazeux (70) est composé d'un dispositif (62) de pompage de gaz et d'éléments isolants acoustiques (75, 75', 76, 76', 78, 78'), lesquels éléments isolants acoustiques comprennent un fluide intercepteur liquide et présentent de ce fait une grande raideur acoustique comparativement au gaz de mesure, ces éléments isolants acoustiques étant mis en liaison avec le détecteur (40, 41) de telle manière qu'un courant gazeux traverse le détecteur (40, 41) en passant à travers ces éléments, cependant qu'on peut effectuer des mesures photo-acoustiques pendant les phases d'arrêt du courant gazeux, c'est-à-dire pendant le découplage acoustique.

2. Dispositif détecteur selon la revendication 1, caractérisé en ce que les éléments isolants acoustiques du dispositif d'échange gazeux (70) sont constitués par au moins un premier fluide intercepteur liquide (75) disposé à l'entrée (74") de la cellule collectrice de gaz (41) et au moins un deuxième fluide intercepteur liquide (75, 75') disposé à la' sortie (75") de la cellule collectrice de gaz.

3. Dispositif détecteur selon la revendication 2, caractérisé en ce que le fluide intercepteur (75, 75') se trouve dans les récipients de fluide intercepteur (76, 76') dans lesquels plongent des tubes plongeurs (74A, 74B).

4. Dispositif détecteur selon la revendication 3, caractérisé en ce que les récipients de fluide intercepteur (76, 76') sont en communication par une conduite (77) avec un réservoir de fluide intercepteur (76") qui contient un supplément de fluide intercepteur (75).

5. Dispositif détecteur selon la revendication 4, caractérisé en ce que, dans la conduite (77), est disposé eu moins un organe d'arrêt (77') qui arrête le courant de fluide intercepteur.

6. Dispositif détecteur selon la revendication 2, caractérisé en ce que le fluide intercepteur (75, 75') est contenu dans des capillaires de fluide intercepteur (78, 78').

7. Dispositif détecteur selon la revendication 6, caractérisé en ce qu'à leurs extrémités, les capillaires de fluide intercepteur (78, 78') qui contiennent le fluide intercepteur (75, 75') se raccordent, sans rupture de ligne, à des élargissements en forme d'entonnoir, qui affaiblissent progressivement l'effet de capillarité, et qui servent de vases d'expansion (78" , 78" ", 78" ', 78" " ').

8. Dispositif détecteur selon l'une des revendications 1 à 7, caractérisé en ce que le dispositif (62) de pompage de gaz repose sur le principe de la pompe à membrane.

9. Emploi du dispositif détecteur selon la revendication 1, caractérisé en ce que l'on capte les fluctuations de pression caractéristiques, provenant du microphone (48) contenu dans la cellule collectrice de gaz (41), aussi bien le signal de mesure photo-acoustique que les fluctuations qui se produisent au cours de l'échange, et en ce que, les signaux électriques qui en sont dérivés sont utilisées par les moyens de traitement des signaux (80) pour le contrôle du fonctionnement du dispositif d'échange gazeux (70), en particulier des pompes à membrane (62, 62') et éventuellement du fluide intercepteur (75, 75') ainsi que du microphone (48).

Fig.1

Fig. 2

Fig. 3

Fig. 4

Fig. 5

Fig. 6

**Fig. 7**

63

64

62

64'

**Fig. 8**

62

76'  74'·41  48  74''  74

74'  76

74_B  74_A

75'  75  75,75'

77'  77  77  77  77'

$\vec{g}$

**Fig. 9**

62

78^V

78'  75'

78^III

48  74''

78''

74'''  41  75  78

$\vec{g}$

78^IV